# EUROPÄISCHE PATENTSCHRIFT

(11) **EP 0 829 490 B1**
(45) Veröffentlichungstag und Bekanntmachung des Hinweises auf die Patenterteilung: **15.12.1999**
(21) Anmeldenummer: 97115607.0
(22) Anmeldetag: 09.09.1997
(51) Int. Cl.: C08F 4/654, C08F 10/00

(54) **Bei ihrer Herstellung modifizierte Ziegler-Natta-Katalysatorsysteme**
Ziegler-Natta catalyst systems modified by their preparation
Systèmes catalytiques Ziegler-Natta modifiés par leur préparation

(30) Priorität: 13.09.1996 DE 19637370
(43) Veröffentlichungstag der Anmeldung: 18.03.1998
(73) Patentinhaber: BASF AKTIENGESELLSCHAFT, 67056 Ludwigshafen (DE)
(72) Erfinder: Hüffer, Stephan, Dr., 67071 Ludwigshafen (DE); Moll, Ulrich, Dr., 67487 St Martin (DE); McKenzie, Ian David, Dr., Welwyn Garden City (GB); Langhauser, Franz, Dr., 67152 Ruppertsberg (DE); Kölle, Peter, Dr., 67098 Bad Dürkheim (DE); Hingmann, Roland, Dr., 68526 Ladenburg (DE); Schweier, Günther, Dr., 67159 Friedelsheim (DE); Hemmerich, Rainer, Dr., 67269 Grünstadt (DE); Kerth, Jürgen, Dr., 67316 Carlsberg (DE)

(56) Entgegenhaltungen:
- EP-A- 0 530 599
- WO-A-93/23440
- GB-A- 2 101 610

## Beschreibung

Die vorliegende Erfindung betrifft bei ihrer Herstellung modifizierte Katalysatorsysteme vom Typ der Ziegler-Natta-Katalysatoren, enthaltend als aktive Bestandteile
a) eine titanhaltige Feststoffkomponente, die durch Umsetzung einer Verbindung des Titans mit einer Verbindung des Magnesiums, einem Halogen, einem anorganischen Oxid als Träger einem C₁- bis C₈-Alkanol und einem Carbonsäureester als Elektronendonorverbindung erhalten wird,
sowie als Cokatalysator,
b) eine Aluminiumverbindung und
c) gegebenenfalls eine weitere Elektronendonorverbindung,
wobei die titanhaltige Feststoffkomponente a) in der Weise hergestellt wird, daß man zunächst in einer ersten Stufe ein anorganisches Oxid als Träger mit einer Lösung einer chlorfreien Verbindung des Magnesiums in einem inerten Lösungsmittel versetzt, dabei dieses Gemisch 0,5 bis 5 Stunden lang bei einer Temperatur zwischen 10 und 120°C rührt und anschließend unter ständigem Rühren in einem inerten Lösungsmittel mit einem C₁- bis C₈-Alkanol im wenigstens 1,3-fachen Überschuß, bezogen auf die Verbindung des Magnesiums, zu einem chlorfreien Zwischenprodukt umsetzt, danach diesem ohne Reinigung oder Extraktion eine Verbindung des drei- oder vierwertigen Titans und einen Carbonsäureester als Elektronendonorverbindung hinzufügt, das daraus resultierende Gemisch wenigstens 30 Minuten lang bei einer Temperatur zwischen 20 und 130°C rührt, den so erhaltenen festen Stoff anschließend abfiltriert und wäscht und anschließend in einer zweiten Stufe den aus der ersten Stufe erhaltenen Feststoff in einem inerten Lösungsmittel, welches wenigstens 5 Gew.-% Titantetrachlorid enthält, extrahiert und mit einem flüssigen Alkan wäscht.

Außerdem betrifft die Erfindung ein Verfahren zur Herstellung derartiger Ziegler-Natta-Katalysatorsysteme, die Herstellung von Polymerisaten des Propylens mit Hilfe dieser Katalysatorsysteme, die hiernach erhältlichen Polymerisate sowie Folien, Fasern und Formkörper aus diesen Polymerisaten.

Katalysatorsysteme vom Typ der Ziegler-Natta-Katalysatoren sind u.a. aus der DE-A 42 16 548, der DE-A 44 19 438, der EP-A 530 599 und der US-A 4 857 613 bekannt. Diese Systeme werden insbesondere zur Polymerisation von C₂-C₁₀-Alk-1-enen verwendet und enthalten u.a. Verbindungen des mehrwertigen Titans, Aluminiumhalogenide und/oder -alkyle, sowie Elektronendonorverbindungen, insbesondere Siliciumverbindungen, Ether, Carbonsäureester, Ketone und Lactone, die einerseits in Verbindung mit der Titankomponente und andererseits als Cokatalysator verwendet werden.

Die Herstellung der Ziegler-Natta Katalysatoren geschieht üblicherweise in zwei Schritten. Zuerst wird die titanhaltige Feststoffkomponente hergestellt. Anschließend wird diese mit dem Cokatalysator umgesetzt. Mit Hilfe der so erhaltenen Katalysatoren wird anschließend die Polymerisation durchgeführt.

In der US-A 48 57 613 und der US-A 52 88 824 werden Katalysatorsysteme vom Typ der Ziegler-Natta-Katalysatoren beschrieben, die neben einer titanhaltigen Feststoffkomponente und einer Aluminiumverbindung noch organische Silanverbindungen als externe Elektronendonorverbindungen aufweisen. Die dabei erhaltenen Katalysatorsysteme zeichnen sich u.a. durch eine gute Produktivität aus und liefern Polymerisate des Propylens mit einer hohen Stereospezifität, d.h. einer hohen Isotaktizität, einem geringen Chloranteil und einer guten Morphologie, d.h. einem geringen Anteil an Feinstkorn.

Die Herstellung der titanhaltigen Feststoffkomponente nach den Lehren der US-A 4 857 613 und der US-A 5 288 824 erfolgt in einem mehrstufigen Herstellungsverfahren, wobei große Mengen an titan- und chlorhaltigen Einsatzstoffen verbraucht werden, deren anschließende Entsorgung und Aufarbeitung die Herstellkosten erheblich erhöht. Darüber hinaus ist die Herstellung der titanhaltigen Feststoffkomponente relativ zeitaufwendig, da u.a. das in der ersten Stufe erhaltene Zwischenprodukt noch gereinigt bzw. extrahiert werden muß.

Weiterhin ist es für die Polymerisation von Alk-1-enen wichtig, daß die dabei verwendeten Ziegler-Natta-Katalysatorsysteme stets eine möglichst hohe Produktivität und Stereospezifität, d.h. möglichst geringe xylol- und heptanlösliche Anteile aufweisen.

Der vorliegenden Erfindung lag daher die Aufgabe zugrunde, den geschilderten Nachteilen abzuhelfen und ein verbessertes Ziegler-Natta-Katalysatorsystem zu entwickeln, welches u.a. eine hohe Produktivität und Stereospezifität aufweist und nach einem möglichst einfachen und wenig zeitaufwendigen Verfahren hergestellt werden kann, wobei die Menge an titan- und chlorhaltigen Einsatzstoffen verringert werden kann.

Demgemäß wurden die eingangs definierten Katalysatorsysteme vom Typ der Ziegler-Natta-Katalysatoren gefunden.

Die erfindungsgemäßen Katalysatorsysteme enthalten u.a. neben einer titanhaltigen Feststoffkomponente a) noch einen Cokatalysator. Als Cokatalysator kommt dabei die Aluminiumverbindung b) in Frage. Vorzugsweise wird neben dieser Aluminiumverbindung b) als weiterer Bestandteil des Cokatalysators noch eine Elektronendonorverbindung c) eingesetzt.

Zur Herstellung der titanhaltigen Feststoffkomponente a) werden als Titanverbindungen im allgemeinen Halogenide oder Alkoholate des drei- oder vierwertigen Titans verwendet, wobei die Chloride des Titans, insbesondere Titantetrachlorid, bevorzugt sind. Die titanhaltige Feststoffkomponente enthält ferner noch einen Träger.

Weiter werden bei der Herstellung der titanhaltigen Feststoffkomponente u.a. Verbindungen des Magnesiums eingesetzt. Als solche kommen insbesondere chlorfreie Verbindungen des Magnesiums, z.B. Magnesiumalkyle und Magnesiumaryle, sowie Magnesiumalkoxy- und Magnesiumaryloxyverbindungen in Betracht, wobei bevorzugt Magnesiumdi- (C₁-C₁₀-alkyl) -Verbindungen verwendet werden, u.a. n-Butyloctylmagnesium oder n-Butylethylmagnesium. Daneben kann die titanhaltige Feststoffkomponente noch Halogen, bevorzugt Chlor oder Brom, enthalten.

Ferner enthält die titanhaltige Feststoffkomponente a) noch Elektronendonorverbindungen, beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugt werden als Elektronendonorverbindungen innerhalb der titanhaltigen Feststoffkomponente Phthalsäurederivate der allgemeinen Formel (II) 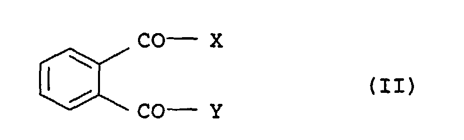 verwendet, wobei X und Y jeweils für ein Chloratom oder einen C₁- bis C₁₀-Alkoxyrest oder gemeinsam für Sauerstoff stehen. Besonders bevorzugte Elektronendonorverbindungen sind Phthalsäureester, wobei X und Y einen C₁-C₈-Alkoxyrest, beispielsweise einen Methoxy-, Ethoxy-, Propyloxy- oder einen Butyloxyrest bedeuten.

Weiter bevorzugte Elektronendonorverbindungen innerhalb der titanhaltigen Feststoffkomponente sind u.a. Diester von 3- oder 4-gliedrigen, gegebenenfalls substituierten Cycloalkyl-1,2-dicarbonsäuren, sowie Monoester von gegebenenfalls substituierten Benzophenon-2-carbonsäuren. Als Hydroxyverbindungen werden bei diesen Estern die bei Veresterungsreaktionen üblichen Alkohole verwendet, u.a. C₁-bis-C₁₅-Alkanole, C₅-bis-C₇-Cycloalkanole, die ihrerseits C₁-bis C₁₀-Alkylgruppen tragen können, ferner C₆-bis-C₁₀-Phenole.

Die titanhaltige Feststoffkomponente kann nach an sich bekannten Methoden hergestellt werden. Beispiele dafür sind u.a. in der EP-A 171 200, der GB-A 2 111 066, der US-A 48 57 613 und der US-A 52 88 824 beschrieben.

Bei der Herstellung der titanhaltigen Feststoffkomponente a) wird bevorzugt folgendes zweistufige Verfahren angewandt:

In der ersten Stufe versetzt man zunächst ein anorganisches Oxid, welches in der Regel einen pH-Wert von 1 bis 6,5 einen mittleren Teilchendurchmesser von 5 bis 200 pm, insbesondere von 20 bis 70 µm, ein Porenvolumen von 0,1 bis 10 cm³/g, insbesondere von 1,0 bis 4,0 cm³/g, und eine spezifische Oberfläche von 10 bis 1000 m²/g, insbesondere von 100 bis 500 m²/g, aufweist, mit einer Lösung einer chlorfreien magnesiumhaltigen Verbindung in einem inerten Lösungsmittel, bevorzugt einem flüssigen Alkan oder einem aromatischen Kohlenwasserstoff, z.B. Toluol oder Ethylbenzol, wonach man dieses Gemisch 0,5 bis 5 Stunden lang bei einer Temperatur zwischen 10 und 120°C rührt. Vorzugsweise setzt man pro Mol des Trägers 0,1 bis 1 mol der Magnesiumverbindung ein. Anschließend fügt man unter ständigem Rühren, insbesondere bei Temperaturen von -20 bis +80°C, vorzugsweise bei 0 bis +40°C ein C₁-bis C₈-Alkanol, insbesondere Ethanol im wenigstens 1,3-fachen, bevorzugt im wenigsten 1,6-fachen, insbesondere im 1,8-fachen Überschuß, bezogen auf die magnesiumhaltige Verbindung, hinzu. Dabei entsteht ein chlorfreies Zwischenprodukt, welches ohne Reinigung oder Extraktion weiterverarbeitet wird. Nach etwa 30 bis 120 Minuten fügt man diesem Zwischenprodukt bei einer Temperatur zwischen 10 und 50°C eine Verbindung des drei- oder vierwertigen Titans, insbesondere Titantetrachlorid, sowie einen Carbonsäureester als Elektronendonorverbindung hinzu. Dabei setzt man pro Mol Magnesium des aus der ersten Stufe erhaltenen Feststoffs 1 bis 15 mol, bevorzugt 2 bis 5 mol des drei- oder vierwertigen Titans und 0,01 bis 1 mol, insbesondere 0,3 bis 0,7 mol, der Elektronendonorverbindung ein. Dieses Gemisch wird wenigstens 30 Minuten lang bei einer Temperatur zwischen 10 und 150°C gerührt, der so erhaltene feste Stoff anschließend abfiltriert und mit einem C₇- bis C₁₀-Alkylbenzol, bevorzugt mit Ethylbenzol, gewaschen.

In der zweiten Stufe extrahiert man den aus der ersten Stufe erhaltenen Feststoff wenigstens 30 Minuten lang bei Temperaturen zwischen 100 und 150°C mit überschüssigem Titantetrachlorid oder einer im Überschuß vorliegenden Lösung von Titantetrachlorid in einem inerten Lösungsmittel, vorzugsweise einem C₇-C₁₀-Alkylbenzol, wobei das Lösungsmittel wenigstens 5 Gew.-% Titantetrachlorid enthält. Danach wäscht man das Produkt solange mit einem flüssigen Alkan, bis der Gehalt der Waschflüssigkeit an Titantetrachlorid weniger als 2 Gew.-% beträgt.

Das erfindungsgemäße Ziegler-Natta-Katalysatorsystem ist u.a. dadurch charakterisiert, daß man in der ersten Stufe seiner Herstellung eine chlorfreie Verbindung des Magnesiums in einem inerten Lösungsmittel verwendet und diese mit dem Träger und dem C₁- bis C₈-Alkanol zu einem chlorfreien Zwischenprodukt umsetzt, welches ohne Reinigung oder Extraktion weiterverarbeitet wird.

In der titanhaltigen Feststoffkomponente a) wird vorzugsweise ein solches feinteiliges anorganisches Oxid als Träger verwendet, welches einen pH-Wert von 1 bis 6,5, einen mittleren Teilchendurchmesser von 5 bis 200 µm, insbesondere von 20 bis 70 µm und einen mittleren Teilchendurchmesser der Primärpartikel von 1 bis 20 µm, insbesondere von 1 bis 5 µm aufweist. Bei den sogenannten Primärpartikeln handelt es sich dabei um poröse, granuläre Oxidpartikel, welche durch Mahlung, gegebenenfalls nach entsprechender Siebung, aus einem entsprechenden Hydrogel erhalten werden. Das Hydrogel wird dabei im sauren Bereich, d.h. in einem Bereich mit einem pH-Wert zwischen 1 und 6,5 erzeugt, oder aber mit entsprechend sauren Waschlösungen nachbehandelt und gereinigt.

Weiterhin ist das bevorzugt zu verwendende feinteilige anorganische Oxid u.a. auch noch dadurch charakterisiert, daß es Hohlräume bzw. Kanäle mit einem mittleren Durchmesser von 0,1 bis 20 µm, insbesondere von 1 bis 15 µm aufweist, deren makroskopischer Volumenanteil am Gesamtpartikel im Bereich von 5 bis 30 %, insbesondere im Bereich von 10 bis 30 % liegt. Das feinteilige anorganische Oxid weist ferner insbesondere ein Porenvolumen von 0,1 bis 10 cm³/g, bevorzugt von 1,0 bis 4,0 cm³/g und eine spezifische Oberfläche von 10 bis 1000 m²/g, bevorzugt von 100 bis 500 m²/g auf. Der pH-Wert, d.h. der negative dekadische Logarithmus der Protonenkonzentration des anorganischen Oxids liegt im Bereich von 1 bis 6,5, insbesondere im Bereich von 2 bis 6, besonders bevorzugt im Bereich von 3,5 bis 5,5.

Bevorzugte anorganische Oxide sind insbesondere Oxide des Siliciums, des Aluminiums, des Titans oder eines der Metalle der I. bzw. der II. Hauptgruppe des Periodensystems. Als ganz bevorzugtes Oxid wird neben Aluminiumoxid oder Magnesiumoxid oder einem Schichtsilikat auch Kieselgel (SiO₂) verwendet, wobei dieses insbesondere durch Sprühtrocknung erhalten werden kann. Es können auch sogenannte Cogele, d.h. Gemische von zwei verschiedenen anorganischen Oxiden, eingesetzt werden.

Das anorganische Oxid liegt dabei innerhalb der titanhaltigen Feststoffkomponente a) vorzugsweise in solchen Mengen vor, daß auf 1 Mol des anorganischen Oxids 0,1 bis 1,0 Mol, insbesondere 0,2 bis 0,5 Mol der Verbindung des Magnesiums treffen.

Die auf diese Weise erhältliche titanhaltige Feststoffkomponente wird mit einem Cokatalysator als Ziegler-Natta-Katalysatorsystem verwendet. Als Cokatalysator kommt dabei u.a. eine Aluminiumverbindung b) in Frage.

Als Cokatalysatoren geeignete Aluminiumverbindungen b) sind neben Trialkylaluminium auch solche Verbindungen, bei denen eine Alkylgruppe durch eine Alkoxygruppe oder durch ein Halogenatom, beispielsweise durch Chlor oder Brom, ersetzt ist. Bevorzugt werden Trialkylaluminiumverbindungen verwendet, deren Alkylgruppen jeweils 1 bis 8 C-Atome aufweisen, beispielsweise Trimethyl-, Triethyl- oder Methyldiethylaluminium.

Bevorzugt verwendet man neben der Aluminiumverbindung b) noch als weiteren Cokatalysator Elektronendonorverbindungen c) wie beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugte Elektronendonorverbindungen sind dabei siliciumorganische Verbindungen der allgemeinen Formel (I)

R¹ ₙSi (OR²)₄₋ₙ (I)

wobei
R¹ gleich oder verschieden ist und eine C₁- bis C₂₀-Alkylgruppe, eine 5- bis 7-gliedrige Cycloalkylgruppe, die ihrerseits eine C₁- bis C₁₀-Alkylgruppe tragen kann, oder eine C₆- bis C₂₀-Aryl- oder Arylalkylgruppe bedeutet, R² gleich oder verschieden ist und eine C₁- bis C₂₀-Alkylgruppe bedeutet und n für die Zahlen 1, 2 oder 3 steht. Besonders bevorzugt werden dabei solche Verbindungen, in denen R¹ eine C₁- bis C₈-Alkylgruppe oder eine 5- bis 7-gliedrige Cycloalkylgruppe, sowie R² eine C₁- bis C₄-Alkylgruppe bedeutet und n für die Zahlen 1 oder 2 steht.

Unter diesen Verbindungen sind insbesondere Dimethoxydiisopropylsilan, Dimethoxyisobutylisopropylsilan, Dimethoxydiisobutylsilan, Dimethoxydicyclopentylsilan, Dimethoxyisobutylsec.butylsilan, Dimethoxyisopropylsec.butylsilan, Diethoxydicyclopentylsilan und Diethoxyisobutylisopropylsilan hervorzuheben.

Die einzelnen Verbindungen b) sowie gegebenenfalls c) können in beliebiger Reihenfolge einzeln oder als Gemisch zweier Komponenten als Cokatalysator verwendet werden.

Die als Cokatalysatoren wirkenden Verbindungen b) und gegebenenfalls c) kann man sowohl nacheinander als auch zusammen auf die titanhaltige Feststoffkomponente a) einwirken lassen. Üblicherweise geschieht dies bei Temperaturen von 0 bis 150°C, insbesondere von 20 bis 90°C und Drücken von 1 bis 100 bar, insbesondere von 1 bis 40 bar.

Bevorzugt werden die Cokatalysatoren b) sowie gegebenenfalls c) in einer solchen Menge eingesetzt, daß das Atomverhältnis zwischen Aluminium aus der Aluminiumverbindung und Titan aus der titanhaltigen Feststoffkomponente a) 10:1 bis 800:1, insbesondere 20:1 bis 200:1, und das Molverhältnis zwischen der Aluminiumverbindung und der als Cokatalysator eingesetzten Elektronendonorverbindung c) 1:1 bis 250:1, insbesondere 10:1 bis 80:1 beträgt.

Die erfindungsgemäßen Katalysatorsysteme werden zur Herstellung von Polymerisaten aus C₂-C₁₀-Alk-1-enen verwendet. Sie eigenen sich besonders gut für die Herstellung von Polymerisaten des Propylens und des Ethylens, d.h. von entsprechenden Homopolymerisaten und Copolymerisaten dieser Monomere zusammen mit anderen C₂-C₁₀-Alk-1-enen. Dabei beträgt der Anteil der Monomere Propylen bzw. Ethylen an den Copolymerisaten mindestens 50 mol-%.

Unter der Bezeichnung C₂-C₁₀-Alk-1-ene sollen dabei u.a. Ethylen, Propylen, But-1-en, Pent-1-en, Hex-1-en, Hept-1-en oder Oct-1-en verstanden werden, wobei die Comonomere Ethylen, Propylen und But-1-en besonders bevorzugt sind.

Die erfindungsgemäßen Katalysatorsysteme können aber auch zur Herstellung von Polymerisaten anderer C₂-C₁₀-Alk-1-ene verwendet werden, beispielsweise zur Herstellung von Homo- oder Copolymerisaten des But-1-ens, des Pent-1-ens, des Hex-1-ens, des Hept-1-ens oder des Oct-1-ens.

Vorzugsweise werden mit dem erfindungsgemäßen Katalysatorsystem solche Polymerisate hergestellt, die
50 bis 100 mol-% Propylen,
0 bis 50 mol-%, insbesondere 0 bis 30 mol-% Ethylen und
0 bis 20 mol-%, insbesondere 0 bis 10 mol-% C₄- bis C₁₀-Alk-1-ene enthalten. Die Summe der mol-% ergibt stets 100.

Die Herstellung derartiger Polymerisate von C₂-C₁₀-Alk-1-enen kann in den üblichen, für die Polymerisation von C₂-C₁₀-Alk-1-enen verwendeten Reaktoren entweder absatzweise oder bevorzugt kontinuierlich u.a. als Suspensionspolymerisation oder bevorzugt als Gasphasenpolymerisation durchgeführt werden. Geeignete Reaktoren sind u.a. kontinuierlich betriebene Rührreaktoren, die ein Festbett aus feinteiligem Polymerisat enthalten, welches üblicherweise durch geeignete Rührvorrichtungen in Bewegung gehalten wird. Selbstverständlich kann die Reaktion auch in einer Reihe von mehreren, hintereinander geschalteten Reaktoren durchgeführt werden (Reaktorkaskade). Die Reaktionsdauer hängt entscheidend von den jeweils gewählten Reaktionsbedingungen ab. Sie liegt üblicherweise zwischen 0,2 und 20 Stunden, meistens zwischen 0,5 und 10 Stunden.

Die Polymerisationsreaktion wird zweckmäßigerweise bei Temperaturen von 20 bis 150°C und Drücken von 1 bis 100 bar durchgeführt. Bevorzugt sind dabei Temperaturen von 40 bis 100°C und Drücke von 10 bis 50 bar. Die Molmasse der dabei gebildeten Polyalk-1-ene kann durch Zugabe von in der Polymerisationstechnik gebräuchlichen Reglern, beispielsweise von Wasserstoff, kontrolliert und über einen weiten Bereich eingestellt werden. Weiterhin ist es möglich, inerte Lösungsmittel wie beispielsweise Toluol oder Hexan, Inertgas wie Stickstoff oder Argon und kleinere Mengen Polypropylenpulver mitzuverwenden.

Die mit Hilfe des erfindungsgemäßen Katalysatorsystems erhaltenen Propylenhomo- und -copolymerisate sind in den für Polyalk-1-ene üblichen Molmassen erhältlich, wobei Polymerisate mit Molmassen (Gewichtsmittel) zwischen 20 000 und 500 000 bevorzugt werden. Ihre Schmelzflußindizes, bei 230°C und unter einem Gewicht von 2,16 kg, nach DIN 53 735 liegen im Bereich von 0,1 bis 100 g/10 min, insbesondere im Bereich von 0,5 bis 50 g/10 min.

Das erfindungsgemäße Ziegler-Natta-Katalysatorsystem weist gegenüber den bisher bekannten Katalysatorsystemen eine erhöhte Produktivität und eine ausgezeichnete Stereospezifität, insbesondere bei Gasphasenpolymerisationen auf. Die auf diese Weise erhältlichen Polymerisate zeichnen sich auch durch eine hohe Schüttdichte, geringe heptan- und xylollösliche Anteile und einem niedrigen Restchlorgehalt aus.

Das zu seiner Herstellung eingesetzte, ebenfalls erfindungsgemäße Verfahren ist u.a. dadurch charakterisiert, daß auf den Halogenierungsschritt der Verbindung des Magnesiums und auf zeitaufwendige Reinigungs- und Extraktionsschritte des Zwischenproduktes verzichtet werden kann. Neben der dadurch erzielten Zeitersparnisse kann mit diesem ebenfalls erfindungsgemäßen Verfahren die Menge an titan- und chlorhaltigen Einsatzstoffen deutlich verringert werden.

Aufgrund ihrer guten mechanischen Eigenschaften eignen sich die mit dem erfindungsgemäßen Katalysatorsystem hergestellten Propylenpolymerisate vor allem für die Herstellung von Folien, Fasern und Formkörpern.

### Beispiele

### Beispiel 1

a) Herstellung der titanhaltigen Feststoffkomponente (1)
   In einer ersten Stufe wurde feinteiliges, sphärisches Kieselgel (SiO₂), das einen Teilchendurchmesser von 20 bis 45 µm, ein Porenvolumen von 1,5 cm3/g und eine spezifische Oberfläche von 260 m²/g aufwies, mit einer Lösung von n-Butyloctylmagnesium in n-Heptan versetzt, wobei pro Mol SiO₂ 0,3 Mol der Magnesiumverbindung eingesetzt wurden. Die Lösung wurde 30 Minuten bei 95°C gerührt, danach auf 20°C abgekühlt, wonach die 1,8-fache molare Menge, bezogen auf die magnesiumorganische Verbindung, an Ethanol in 20 ml Heptan unter Kühlung zugesetzt wurde, wobei die Reaktionstemperatur auf unter 45°C gehalten wurde. Nach 45 Minuten wurde das chlorfreie Zwischenprodukt ohne Reinigung bzw. Extraktionsschritt unter ständigem Rühren mit 4,2 Mol Titantetrachlorid und 0,5 Mol Di-n-butylphthalat, jeweils bezogen auf 1 Mol Magnesium, versetzt. Anschließend wurde 1 Stunde bei 100°C gerührt, der so erhaltene feste Stoff abfiltriert und mehrmals mit Ethylbenzol gewaschen.
   Das daraus erhaltene Festprodukt extrahierte man 60 Minuten lang in einer zweiten Stufe bei 125°C mit einer 10 vol.-%igen Lösung von Titantetrachlorid in Ethylbenzol. Danach wurde das Festprodukt durch Filtration vom Extraktionsmittel getrennt und solange mit n-Heptan gewaschen, bis das Extraktionsmittel nur noch 0,3 Gew.-% Titantetrachlorid aufwies.
   Die titanhaltige Feststoffkomponente enthielt
   3,8 Gew.-% Ti
   7,2 Gew.-% Mg
   28,1 Gew.-% Cl.

Die Bestimmung des Teilchendurchmessers erfolgte durch Coulter-Counter-Analyse (Korngrößenverteilung der Kieselgelpartikel), die des Porenvolumens und der spezifischen Oberfläche durch Stickstoff-Absorption nach DIN 66131 oder durch Quecksilber-Porosimetrie nach DIN 66133. Die Bestimmung des makroskopischen Volumenanteils der Hohlräume und Kanäle des verwendeten Kieselgels geschah mit Hilfe der Scanning Electron Microscopy bzw. der Electron Probe Micro Analysis.
b) Polymerisation von Propylen
   Die Polymerisation wurde in einem mit einem Rührer versehenen Autoklavenreaktor mit einem Nutzvolumen von 10 l in Anwesenheit von Wasserstoff als Molekulargewichtsregler in der Gasphase durchgeführt.
   In den Gasphasenreaktor wurde bei einem Druck von 28 bar und bei einer Temperatur von 70°C gasförmiges Propylen in Gegenwart von 8 Liter Wasserstoff eingeleitet. Bei einer Verweilzeit von einer Stunde wurde mit Hilfe der in Beispiel 1 a beschriebenen titanhaltigen Feststoffkomponente a) polymerisiert, wobei 100 mg der titanhaltigen Feststoffkomponente a) 10 mMol Triethylaluminium und 1 mmol Dimethoxyisobutylisopropylsilan als Cokatalysator verwendet wurden.

Nach Beendigung der Gasphasenpolymerisation erhielt man ein Propylenhomopolymerisat mit einem Schmelzflußindex von 11,2 g/10 min., bei 230°C und 2,16 kg (nach DIN 53 735).

In der nachfolgenden Tabelle 2 sind für das erhaltene Propylenhomopolymerisat die Produktivität des eingesetzten Katalysatorsystems (erhaltene Menge an Polymerisat in Gramm/eingesetzte Menge der titanhaltigen Feststoffkomponente in Gramm), die xylol- und heptanlöslichen Anteile, der Chlorgehalt, der Schmelzflußindex und die Schüttdichte aufgeführt.

### Vergleichsbeispiel A

Es wurde unter ansonsten gleichen Bedingungen wie im erfindungsgemäßen Beispiel 1 zuerst eine titanhaltige Feststoffkomponente hergestellt und danach Propylen polymerisiert, wobei aber die magnesiumhaltige Verbindung mehr als 90 Minuten lang mit der 5-fachen molaren Menge, bezogen auf die magnesiumhaltige Verbindung, an Chlorwasserstoff versetzt worden ist. Das nach der Umsetzung des gebildeten Magnesiumchlorids mit dem Ethanol, dem Titantetrachlorid und dem Phthalsäureester resultierende Zwischenprodukt wurde anschließend 180 Minuten lang bei 125°C mit einem Extraktionsgemisch, bestehend aus 90 Vol.-% Ethylbenzol und 10 Vol.-% Titantetrachlorid behandelt.

In der nachfolgenden Tabelle 1 sind für das erfindungsgemäße Beispiel 1 und für das Vergleichsbeispiel A das bei der Herstellung der titanhaltigen Feststoffkomponente a) verwendete Lösungsmittel, die verwendete Magnesiumverbindung, der eingesetzte Träger (mit dem Volumenanteil der Poren) und die Gehalte an Magnesium, Titan und Chlor der titanhaltigen Feststoffkomponente a) aufgeführt.

Die weitere Tabelle 2 enthält die Daten bzgl. der Produktivität des eingesetzten Katalysatorsystems, der xylol- und heptanlöslichen Anteile im erhaltenen Propylenhomopolymerisat sowie dessen Chlorgehalt, Schmelzflußindex und Schüttdichte.

### Beispiele 2 bis 4 und Vergleichsbeispiele B und D

In den weiteren erfindungsgemäßen Beispielen 2 bis 4 wurde analog dem Beispiel 1 zuerst eine titanhaltige Feststoffkomponente a) hergestellt und danach Propylen polymerisiert. Ebenso wurde bei den Vergleichsbeispielen B bis D analog dem Vergleichsbeispiel A zuerst eine titanhaltige Feststoffkomponente a) hergestellt und danach Propylen polymerisiert.

In der nachfolgenden Tabelle 1 sind für die erfindungsgemäßen Beispiele 1 bis 4 ebenso wie für die Vergleichsbeispiele A bis D die verwendete Verbindung des Magnesiums, das bei der Herstellung der titanhaltigen Feststoffkomponente verwendete Lösungsmittel, deren Gehalt an Magnesium, Titan und Chlor sowie der eingesetzte Träger (mit Volumenanteil der Poren) aufgeführt.

In der weiter vorliegenden Tabelle 2 sind für das in den Beispielen 1 bis 4 und den Vergleichsbeispielen A bis D erhaltene Propylenhomopolymerisat die Produktivität des eingesetzten Katalysatorsystems (erhaltene Menge an Polymerisat in Gramm/eingesetzte Menge der titanhaltigen Feststoffkomponente in Gramm), die xylol- und heptanlöslichen Anteile, der Chlorgehalt, der Schmelzflußindex und die Schüttdichte verzeichnet.

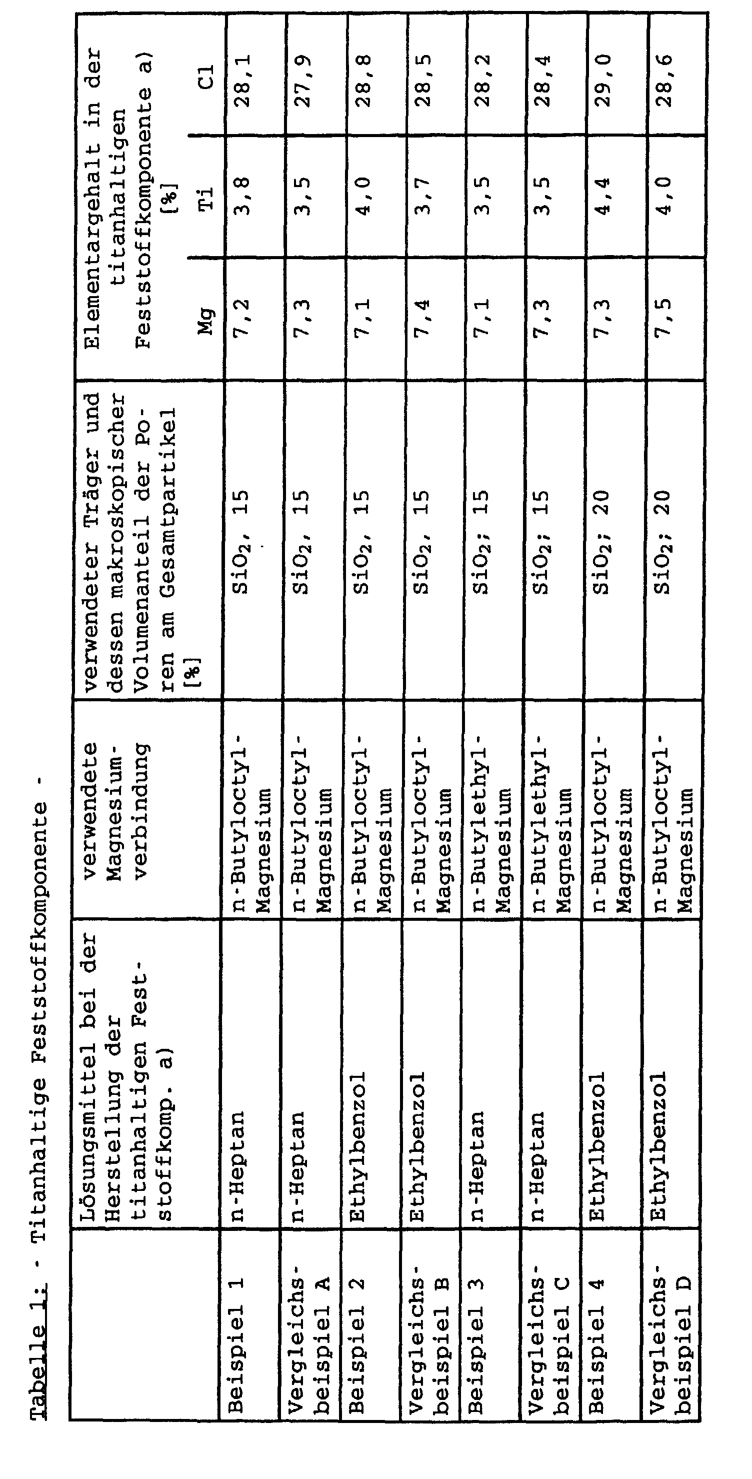

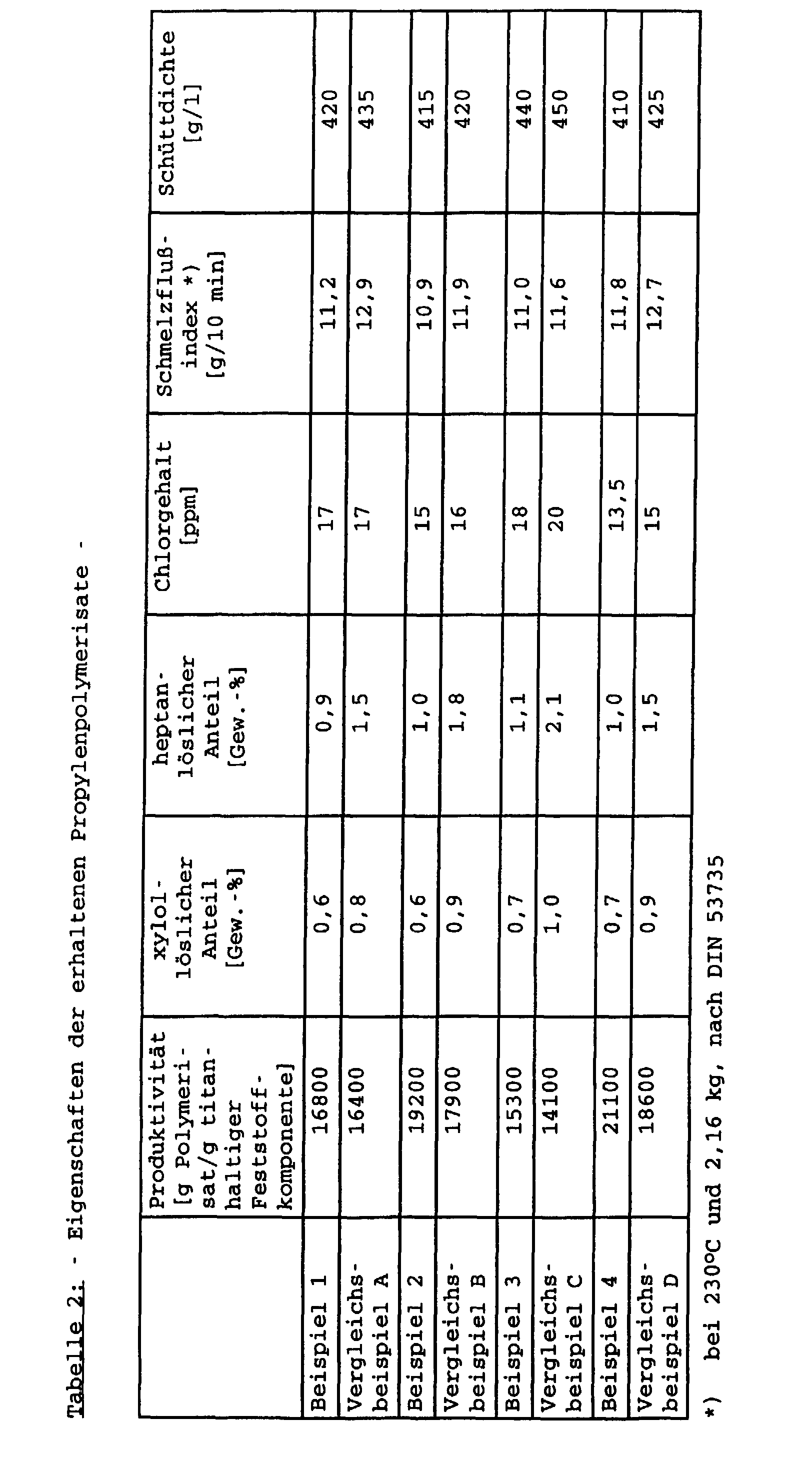

Aus den aufgeführten Tabellen 1 und 2 wird ersichtlich, daß die Mitverwendung einer chlorfreien Zwischenstufe (entstanden durch das Vermeiden des Einleitens von Chlorwasserstoff) bei der Herstellung der titanhaltigen Feststoffkomponente a) zu Ziegler-Natta-Katalysatorsystemen führt, die sich u.a. durch eine erhöhte Produktivität und Stereospezifität (geringere xylol- und heptanlösliche Anteile) auszeichnen. Die dabei erhaltenen Polymerisate des Propylens weisen u.a. verringerte Chlorgehalte auf. Darüber hinaus ist das ebenfalls erfindungsgemäße Herstellungsverfahren nach den Beispielen 1 bis 4 durch um etwa 25 % verkürzte Produktionszeiten, verglichen mit den Vergleichsbeispielen A bis D charakterisiert. Weiterhin kann man bei den erfindungsgemäßen Beispielen 1 bis 4 die Menge des verwendeten Titantetrachlorids um 20 bis 40 % verringern, verglichen mit den Vergleichsbeispielen A bis D.

## Patentansprüche

1. Katalysatorsysteme vom Typ der Ziegler-Natta-Katalysatoren, enthaltend als aktive Bestandteile
a) eine titanhaltige Feststoffkomponente, die durch Umsetzung einer Verbindung des Titans mit einer Verbindung des Magnesiums, einem Halogen, einem anorganischen Oxid als Träger, einem C₁ bis C₈-Alkanol und einem Carbonsäureester als Elektronendonorverbindung erhalten wird,
sowie als Cokatalysator,
b) eine Aluminiumverbindung und
c) gegebenenfalls eine weitere Elektronendonorverbindung,
wobei die titanhaltige Feststoffkomponente a) in der Weise hergestellt wird, daß man zunächst in einer ersten Stufe ein anorganisches Oxid als Träger mit einer Lösung einer chlorfreien Verbindung des Magnesiums in einem inerten Lösungsmittel versetzt, dabei dieses Gemisch 0,5 bis 5 Stunden lang bei einer Temperatur zwischen 10 und 120°C rührt und anschließend bei einer Temperatur von -20 bis +80°C unter ständigem Rühren in einem inerten Lösungsmittel mit einem C₁-bis C₈-Alkanol im wenigstens 1,3-fachen Überschuß, bezogen auf die Verbindung des Magnesiums, zu einem chlorfreien Zwischenprodukt umsetzt, danach diesem ohne Reinigung oder Extraktion eine Verbindung des drei- oder vierwertigen Titans und einen Carbonsäureester als Elektronendonorverbindung hinzufügt, das daraus resultierende Gemisch wenigstens 30 Minuten lang bei einer Temperatur zwischen 20 und 130°C rührt, den so erhaltenen festen Stoff anschließend abfiltriert und wäscht und anschließend in einer zweiten Stufe den aus der ersten Stufe erhaltenen Feststoff in einem inerten Lösungsmittel, welches wenigstens 5 Gew.-% Titantetrachlorid enthält, extrahiert und mit einem flüssigen Alkan wäscht.

2. Katalysatorsysteme nach Anspruch 1, wobei als C₁- bis C₈-Alkanol in der ersten Stufe der Herstellung der titanhaltigen Feststoffkomponente a) Ethanol verwendet wird.

3. Katalysatorsysteme nach einem der Ansprüche 1 oder 2, wobei als chlorfreie Verbindung des Magnesiums ein Magnesiumdi- (C₁-C₁₀-alkyl) eingesetzt wird.

4. Katalysatorsysteme nach einem der Ansprüche 1 bis 3, wobei das als Träger verwendete anorganische Oxid einen pH-Wert von 1 bis 6, einen mittleren Teilchendurchmesser von 5 bis 200 µm und Hohlräume bzw. Kanäle mit einem mittleren Durchmesser von 1 bis 20 µm aufweist, deren makroskopischer Volumenanteil am Gesamtpartikel im Bereich von 5 bis 30 % liegt.

5. Katalysatorsysteme nach einem der Ansprüche 1 bis 4, wobei das verwendete anorganische Oxid sprühgetrocknet ist.

6. Katalysatorsysteme nach einem der Ansprüche 1 bis 5, wobei als anorganisches Oxid Kieselgel (SiO₂) verwendet wird.

7. Katalysatorsysteme nach den Ansprüchen 1 bis 6, wobei als weitere Elektronendonorverbindung c) siliciumorganische Verbindungen der allgemeinen Formel (I)
R¹ ₙSi (OR²)₄₋ₙ (I)
verwendet werden, wobei R¹ gleich oder verschieden ist und eine C₁- bis C₂₀-Alkylgruppe, eine 5- bis 7-gliedrige Cycloalkylgruppe, die ihrerseits eine C₁- bis C₁₀-Alkylgruppe tragen kann, oder eine C₆- bis C₂₀-Aryl- oder Arylalkylgruppe, R² gleich oder verschieden ist und eine C₁- bis C₂₀-Alkylgruppe bedeutet und n für die Zahlen 1, 2 oder 3 steht.

8. Katalysatorsysteme nach den Ansprüchen 1 bis 7, wobei als Aluminiumverbindung b) eine Trialkylaluminiumverbindung verwendet wird, deren Alkylgruppen jeweils 1 bis 8 C-Atome aufweisen.

9. Verfahren zur Herstellung von Katalysatorsystemen gemäß den Ansprüchen 1 bis 8, wobei man bei der Herstellung der titanhaltigen Feststoffkomponente a) zunächst in einer ersten Stufe ein anorganisches Oxid als Träger mit einer Lösung einer Verbindung des Magnesiums in einem inerten Lösungsmittel versetzt, dabei dieses Gemisch 0,5 bis 5 Stunden lang bei einer Temperatur zwischen 10 und 120°C rührt und anschließend bei einer Temperatur von -20 bis +80°C unter ständigem Rühren in einem inerten Lösungsmittel mit einem C₁- bis C₈-Alkanol im wenigstens 1,3-fachen Überschuß, bezogen auf die Verbindung des Magnesiums zu einem chlorfreien Zwischenprodukt umsetzt, danach diesem ohne Reinigung oder Extraktion eine Verbindung des drei- oder vierwertigen Titans und einen Carbonsäureester als Elektronenverbindung hinzufügt, das daraus resultierende Gemisch wenigstens 30 Minuten lang bei einer Temperatur zwischen 20 und 130°C rührt, den so erhaltenen festen Stoff anschließend abfiltriert und wäscht und anschließend in einer zweiten Stufe den aus der ersten Stufe erhaltenen Feststoff in einem inerten Lösungsmittel, welches wenigstens 5 Gew.-% Titantetrachlorid enthält, extrahiert und mit einem flüssigen Alkan wäscht, dadurch gekennzeichnet, daß man in der ersten Stufe eine chlorfreie Verbindung des Magnesiums in einem inerten Lösungsmittel verwendet und diese mit dem Träger und dem C₁- bis C₈-Alkanol zu einem chlorfreien Zwischenprodukt umsetzt, welches ohne Reinigung oder Extraktion weiterverarbeitet wird.

10. Verfahren zur Herstellung von Polymerisaten von C₂-C₁₀-Alk-1-enen durch Polymerisation von C₂-C₁₀-Alk-1-enen und gegebenenfalls von weiteren Comonomeren bei Temperaturen von 20 bis 150°C und Drücken von 1 bis 100 bar in Gegenwart von Ziegler-Natta-Katalysatorsystemen, dadurch gekennzeichnet, daß man Katalysatorsysteme gemäß den Ansprüchen 1 bis 8 verwendet.

11. Verfahren nach Anspruch 10, dadurch gekennzeichnet, daß man als C₂-C₁₀-Alk-1-en Propylen verwendet.

## Claims

1. A catalyst system of the Ziegler-Natta type comprising as active constituents
a) a titanium-containing solid component which is obtained by reacting a compound of titanium with a compound of magnesium, a halogen, an inorganic oxide as support, a C₁-C₈-alkanol and a carboxylic ester as electron donor compound,
and also as cocatalyst
b) an aluminum compound and
c) if desired, a further electron donor compound,
wherein the titanium-containing solid component a) is prepared by first, in a first stage, admixing an inorganic oxide as support with a solution of a chlorine-free compound of magnesium in an inert solvent, stirring this mixture for from 0.5 to 5 hours at from 10 to 120°C and subsequently reacting it at from -20 to +80°C while stirring continually in an inert solvent with a C₁-C₈-alkanol in an at least 1.3-fold excess, based on the compound of magnesium, to give a chlorine-free intermediate, then, without purification or extraction of the intermediate, adding a compound of trivalent or tetravalent titanium and a carboxylic ester as electron donor compound to this intermediate, stirring the resulting mixture for at least 30 minutes at from 20 to 130°C, subsequently filtering off and washing the solid thus obtained and subsequently, in a second stage, extracting the solid obtained from the first stage in an inert solvent comprising at least 5 % by weight of titanium tetrachloride and washing it with a liquid alkane.

2. A catalyst system as claimed in claim 1, wherein the C₁-C₈-alkanol used in the first stage of the preparation of the titanium-containing solid component a) is ethanol.

3. A catalyst system as claimed in claim 1 or 2, wherein the chlorine-free compound of magnesium used is a di(C₁-C₁₀-alkyl)magnesium.

4. A catalyst system as claimed in any of claims 1 to 3, wherein the inorganic oxide used as support has a pH of from 1 to 6, a mean particle diameter of from 5 to 200 µm and voids or channels having a mean diameter of from 1 to 20 µm and a macroscopic proportion by volume in the total particle in the range from 5 to 30 %.

5. A catalyst system as claimed in any of claims 1 to 4, wherein the inorganic oxide used is spray dried.

6. A catalyst system as claimed in any of claims 1 to 5, wherein the inorganic oxide used is silica gel (SiO₂).

7. A catalyst system as claimed in any of claims 1 to 6, wherein the further electron donor compound c) used is an organosilicon compound of the general formula (I)
R¹ ₙSi(OR²)₄₋ₙ (I),
where R¹ are identical or different and are each a C₁-C₂₀-alkyl group, a 5- to 7-membered cycloalkyl group which in turn can bear a C₁-C₁₀-alkyl group, or a C₆-C₂₀-aryl or arylalkyl group, R² are identical or different and are each a C₁-C₂₀-alkyl group and n is 1, 2 or 3.

8. A catalyst system as claimed in any of claims 1 to 7, wherein the aluminum compound b) used is a trialkylaluminum compound whose alkyl groups each have from 1 to 8 carbon atoms.

9. A process for preparing catalyst systems as claimed in any of claims 1 to 8, where the titanium-containing solid component a) is prepared by first, in a first stage, admixing an inorganic oxide as support with a solution of a compound of magnesium in an inert solvent, stirring this mixture for from 0.5 to 5 hours at from 10 to 120°C and subsequently reacting it at from -20 to +80°C while stirring continually in an inert solvent with a C₁-C₈-alkanol in an at least 1.3-fold excess, based on the compound of magnesium, to give a chlorine-free intermediate, then, without purification or extraction of the intermediate, adding a compound of trivalent or tetravalent titanium and a carboxylic ester as electron donor compound to this intermediate, stirring the resulting mixture for at least 30 minutes at from 20 to 130°C, subsequently filtering off and washing the solid thus obtained and subsequently, in a second stage, extracting the solid obtained from the first stage in an inert solvent comprising at least 5 % by weight of titanium tetrachloride and washing it with a liquid alkane, wherein, in the first stage, a chlorine-free compound of magnesium in an inert solvent is used and this is reacted with the support and the C₁-C₈-alkanol to give a chlorine-free intermediate which is processed further without purification or extraction.

10. A process for preparing polymers of C₂-C₁₀-alk-1-enes by polymerization of C₂-C₁₀-alk-1-enes and, if desired, further comonomers at from 20 to 150°C and pressures of from 1 to 100 bar in the presence of Ziegler-Natta catalyst systems, wherein the catalyst systems used are as claimed in any of claims 1 to 8.

11. A process as claimed in claim 10, wherein the C₂-C₁₀-alk-1-ene used is propylene.

## Revendications

1. Systèmes catalytiques du type des catalyseurs Ziegler-Natta, contenant en tant qu'élément actif
(a) un composant solide contenant du titane, obtenu par réaction d'un composé de titane avec un composé de magnésium, un halogène, un oxyde inorganique en tant que support, un alcanol en C₁ à C₈ et un ester d'acide carboxylique en tant que donneur d'électrons,
ainsi que, comme catalyseur,
(b) un composé d'aluminium et
(c) éventuellement un autre donneur d'électrons,
caractérisés en ce que le composant solide de titane (a) est préparé comme suit, à savoir qu'en une première étape on mélange un oxyde inorganique en tant que support à une solution d'un composé de magnésium dépourvu de chlore dans un solvant inerte, on agite ce mélange pendant 0,5 à 5 heures à une température de 10 à 120°C, puis on fait réagir, à une température de -20 à +80°C, sous agitation constante et dans un solvant inerte, avec un alcanol en C₁ à C₈ en excès d'au moins 1,3 fois, par rapport au composé de magnésium, obtenant ainsi un produit intermédiaire exempt de chlore, auquel on ajoute ensuite, sans épuration ni extraction, un composé de titane tri- ou tétravalent et un ester d'acide carboxylique en tant que donneur d'électrons, on agite le mélange résultant pendant au moins 30 minutes à une température de 20 à 130°C, on sépare par filtration le solide ainsi obtenu et on le lave, dans une deuxième étape on extrait le solide obtenu à la première étape dans un solvant inerte contenant au moins 5% en poids de tétrachlorure de titane et on le lave avec un alcane liquide.

2. Systèmes catalytiques selon la revendication 1, caractérisés en ce que l'on utilise de l'éthanol en tant qu'alcanol en C₁ à C₈ dans la première étape de la préparation du composant solide a) contenant du titane.

3. Systèmes catalytiques selon l'une des revendications 1 à 3, caractérisés en ce que l'on utilise comme composé de magnésium exempt de chlore un dialkyl(C₁-C₁₀)magnésium.

4. Systèmes catalytiques selon l'une des revendications 1 à 3, caractérisés en ce que l'oxyde inorganique utilisé comme support présente un pH de 1 à 6, une granulométrie moyenne de 5 à 200 µm ainsi que des pores ou des canaux d'un diamètre moyen de 1 à 20 µm, dont la fraction volumique macroscopique est de 5 à 30% en poids vis-à-vis du total des particules.

5. Systèmes catalytiques selon l'une des revendications 1 à 4, caractérisés en ce que l'oxyde inorganique utilisé est séché par pulvérisation.

6. Systèmes catalytiques selon l'une des revendications 1 à 5, caractérisés en ce que l'on utilise comme oxyde inorganique du gel de silice (SiO₂).

7. Systèmes catalytiques selon l'une des revendications 1 à 6, caractérisés en ce que l'on utilise comme donneur d'électrons c) des composés organosiliciques de la formule générale (I)
R¹ ₙSi(OR²)₄₋ₙ (I)
dans laquelle R¹ sont identiques ou différents et représentent un radical alkyle en C₁ à C₂₀, cycloalkyle pentagonal à heptagonal, qui peut à son tour porter un radical alkyle en C₁ à C₁₀, ou un radical arylalkyle ou aryle en C₆ à C₂₀, R² sont identiques ou différents et représentent un radical alkyle en C₁ à C₂₀ et n est un nombre de valeur 1, 2 ou 3.

8. Systèmes catalytiques selon les revendications 1 à 7, caractérisés en ce que l'on utilise comme composé d'aluminium b) un composé de trialkylaluminium dont les radicaux alkyle comportent de 1 à 8 atomes de carbone.

9. Procédé de préparation de systèmes catalytiques selon les revendications 1 à 8, conformément auquel, lors de la préparation du composé solide de titane a), en une première étape on mélange un oxyde inorganique en tant que support à une solution d'un composé de magnésium dans un solvant inerte, on agite ce mélange pendant 0,5 à 5 heures à une température de 10 à 120°C, puis on fait réagir, à une température de -20 à +80°C, sous agitation constante et dans un solvant inerte, avec un alcanol en C₁ à C₈ en excès d'au moins 1,3 fois, par rapport au composé de magnésium, obtenant ainsi un produit intermédiaire exempt de chlore, auquel on ajoute ensuite, sans épuration ni extraction, un composé de titane tri- ou tétravalent et un ester d'acide carboxylique en tant que donneur d'électrons, on agite le mélange résultant pendant au moins 30 minutes à une température de 20 à 130°C, on sépare par filtration le solide ainsi obtenu et on le lave puis, dans une deuxième étape, on extrait le solide obtenu à la première étape dans un solvant inerte contenant au moins 5% en poids de tétrachlorure de titane et on le lave avec un alcane liquide, caractérisé en ce que l'on utilise dans la première étape un composé de magnésium exempt de chlore dans un solvant inerte et qu'on le fait réagir avec le support et l'alcanol en C₁ à C₈ pour obtenir un produit intermédiaire exempt de chlore, qui est retraité sans épuration ni extraction.

10. Procédé de préparation de polymères d'alc-1-ènes en C₂ à C₁₀ par polymérisation d'alc-1-ènes en C₂ à C₁₀ et éventuellement d'autres monomères, à des températures de 20 à 150°C et des pressions de 1 à 100 bar, en présence de systèmes catalytiques de Ziegler-Natta, caractérisé en ce que l'on utilise des systèmes catalytiques selon les revendications 1 à 8.

11. Procédé selon la revendication 10, caractérisé en ce que l'on utilise du propylène en tant qu'alc-1-ène en C₂ à C₁₀.
